# FASCICULE DE BREVET EUROPEEN

(11) **EP 2 561 571 B1**
(45) Date de publication et mention de la délivrance du brevet: **26.02.2014**
(21) Numéro de dépôt: 11715251.2
(22) Date de dépôt: 20.04.2011
(51) Int. Cl.: H01M 8/02, C25B 9/10

(54) **COUCHE DE DIFFUSION D'UN DISPOSITIF ELECTROCHIMIQUE ET PROCEDE DE REALISATION D'UNE TELLE COUCHE DE DIFFUSION**
DIFFUSIONSSCHICHT FÜR EINE ELEKTROCHEMISCHE VORRICHTUNG UND VERFAHREN ZUR HERSTELLUNG SOLCH EINER DIFFUSIONSSCHICHT
DIFFUSION LAYER FOR AN ELECTROCHEMICAL DEVICE AND METHOD FOR PRODUCING SUCH A DIFFUSION LAYER

(30) Priorité: 20.04.2010 FR 1053009
(43) Date de publication de la demande: 27.02.2013
(73) Titulaire: Commissariat à l'Énergie Atomique et aux Énergies Alternatives, 75015 Paris (FR); Hexcel Reinforcements, 01120 Dagneux (FR)
(72) Inventeur: MORIN, Arnaud, F-38100 Grenoble (FR); BERAUD, Jean-Marc, F-38140 Rives (FR); JONQUILLE, Jenny, F-38000 Grenoble (FR); PAUCHET, Joël, F-38140 Saint Martin d'Uriage (FR); SENECOT, Jean-Marc, F-38510 Morestel (FR)
(74) Mandataire: Ilgart, Jean-Christophe
(86) Numéro de dépôt international: PCT/EP2011/056362
(87) Numéro de publication internationale: WO 2011/131737

(56) Documents cités:
- FR-A1- 2 788 168
- JP-A- 5 135 774
- JP-A- 2005 243 423
- US-A- 5 707 755
- US-A1- 2008 093 006
- US-A1- 2010 279 177

## Description

### DOMAINE TECHNIQUE

L'invention concerne le domaine des systèmes, ou dispositifs, électrochimiques comportant des couches de diffusion à base d'un matériau électriquement conducteur tel que du carbone. L'invention concerne notamment le domaine des piles à combustible et des électrolyseurs de type PEM (à membrane échangeuse de protons), des piles à combustible à acide phosphorique (PAFC), des batteries, etc.

### ÉTAT DE LA TECHNIQUE ANTÉRIEURE

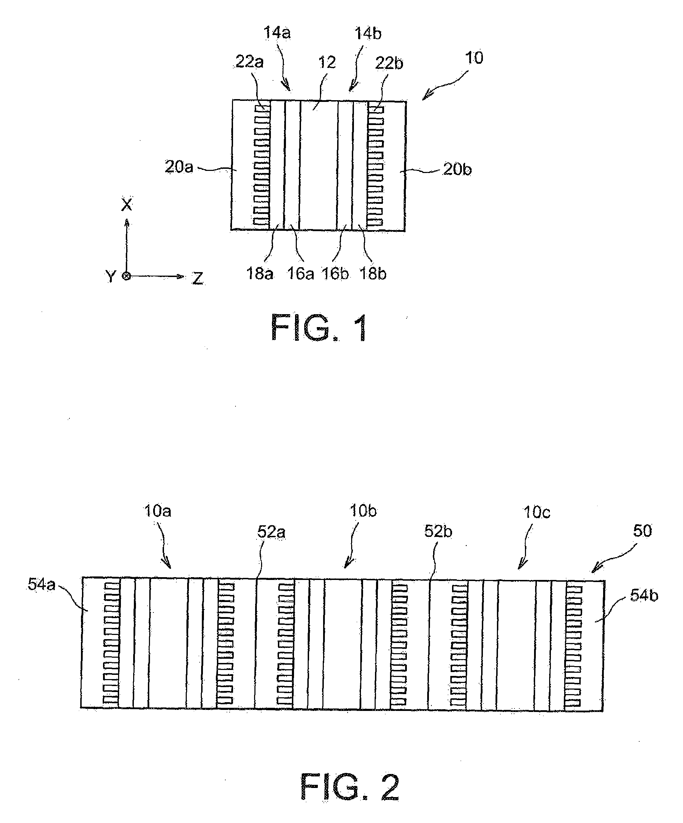

Une cellule électrochimique 10 d'une pile à combustible de type PEMFC (Polymer Electrolyte Membrane Fuel Cell) est représentée schématiquement sur la figure 1. Cette cellule 10 comporte un assemblage membrane-électrodes (AME) comprenant une membrane 12, qui forme un électrolyte, à base de polymère et disposée entre deux électrodes : une anode 14a et une cathode 14b. L'anode 14a et la cathode 14b comportent chacune une couche active 16a, 16b et une couche de diffusion 18a, 18b.

La réalisation d'un tel AME comporte notamment une étape de dépôt des couches actives 16a, 16b correspondant par exemple à la mise en oeuvre de procédés de type enduction, transfert, pulvérisation, sérigraphie, etc. Il est possible soit de déposer les couches actives 16a, 16b sur les couches de diffusion 18a, 18b, l'anode 14a et la cathode 14b ainsi réalisées étant ensuite assemblées de chaque côté de la membrane 12, soit de déposer les couches actives 16a, 16b de chaque côté de la membrane 12, les couches de diffusion 18a, 18b étant ensuite assemblées sur les couches actives 16a, 16b.

Deux joints peuvent également être disposés de chaque côté de l'AME.

Les surfaces de l'anode 14a et de la cathode 14b se trouvant face à la membrane 12 ne sont pas nécessairement identiques mais sont inférieures ou égales aux surfaces de la membrane 12 contre lesquelles elles sont disposées.

Dans la cellule 10, lorsqu'elle est utilisée dans une pile à combustible, l'AME permet de convertir l'énergie chimique de la réaction de formation de l'eau à partir d'hydrogène (H₂) et d'oxygène (O₂) gazeux, servant respectivement de combustible et de comburant à cette réaction, en énergie électrique. Ces gaz sont distribués respectivement à l'anode 14a (recevant l'hydrogène) et à la cathode 14b (recevant l'oxygène) par l'intermédiaire d'une plaque monopolaire anodique 20a et d'une plaque monopolaire cathodique 20b entre lesquelles l'AME est disposé. Ces plaques monopolaires 20a, 20b servent également à la collecte de l'énergie électrique produite et à l'évacuation de la chaleur produite par la réaction de conversion de l'énergie chimique en énergie électrique. Dans les plaques monopolaires 20a, 20b représentées sur la figure 1, la distribution des gaz (H₂ et O₂) est assurée par des canaux 22a, 22b formés dans celles-ci et s'étendant dans une direction parallèle à l'axe y (longueur des canaux 22a, 22b parallèle à l'axe y). Dans une variante, les plaques monopolaires 20a, 20b peuvent avoir une structure poreuse permettant de réaliser cette distribution des gaz sans nécessiter de canaux.

Un dispositif électrochimique 50 de type PEM est représenté schématiquement sur la figure 2. Ce dispositif électrochimique est par exemple une pile à combustible. Cette pile à combustible 50 est formée par plusieurs cellules électrochimiques 10a, 10b, 10c, par exemple similaires à la cellule électrochimique 10 précédemment décrite en liaison avec la figure 1, disposées les unes contre les autres.

Dans un tel dispositif électrochimique, deux plaques monopolaires adjacentes, l'une servant à la distribution du combustible (plaque monopolaire anodique 18a d'une première cellule) et l'autre servant à la distribution du comburant (plaque monopolaire cathodique 18b d'une seconde cellule adjacente à la première cellule), peuvent être formées par un même élément appelé plaque bipolaire. Ainsi, dans la pile à combustible 50 représentée sur la figure 2, les AME des cellules 10a, 10b et 10c sont séparés les uns des autres par des plaques bipolaires 52a, 52b. Chaque extrémité de la pile à combustible 50 comporte une plaque monopolaire 54a, 54b.

Chaque plaque bipolaire 52a, 52b peut être munie de canaux dans lesquels circule un fluide caloporteur permettant de refroidir les cellules électrochimiques 10a, 10b, 10c de la pile à combustible 50.

Le dispositif électrochimique 50 représenté sur la figure 2 pourrait également être un électrolyseur de type PEM, un tel électrolyseur comportant une structure analogue à une pile à combustible PEM. Le fonctionnement d'un tel électrolyseur correspond toutefois au fonctionnement inverse de celui d'une pile à combustible, l'énergie électrique étant convertie en énergie chimique en formant de l'hydrogène et de l'oxygène gazeux à partir d'eau.

Dans les cellules électrochimiques 10a-10c de la pile à combustible 50, chaque circuit de distribution de fluides (combustible, comburant et éventuellement fluide caloporteur) est muni d'une entrée et d'une sortie de ces fluides. Or, il est important d'assurer une étanchéité dans la pile à combustible 50 afin d'empêcher tout mélange des fluides entre eux, ainsi que toute fuite de fluide depuis l'intérieur d'une des cellules vers l'extérieur de la pile. Ainsi, l'étanchéité constitue un point très important à prendre en compte lors de la conception d'une pile à combustible. Cette étanchéité est assurée par des joints disposés entre les plaques monopolaires ou bipolaires et les AME, du côté anodique et cathodique. La forme et la fonction de ces joints dépendent de l'architecture des cellules électrochimiques, et plus généralement de l'architecture de la pile à combustible.

Ainsi, dans une cellule électrochimique, des joints servent uniquement à empêcher les fuites de combustible et de comburant vers l'extérieur de la pile à combustible, car l'étanchéité entre les compartiments anodique et cathodique est assurée par la membrane polymère de l'AME.

Dans une pile à combustible de type PEM, les fluides sont généralement acheminés au niveau de chaque cellule électrochimique par l'intermédiaire de canaux traversant l'ensemble de l'empilement de cellules, et donc à travers chaque plaque bipolaire. Le joint sert alors à empêcher les fuites de fluide de l'intérieur vers l'extérieur de la pile et éviter les mélanges de fluides.

Dans une pile à combustible ou un électrolyseur de type PEM, chaque couche de diffusion est composée d'un support de diffusion et d'une couche microporeuse.

Le rôle des couches de diffusion dans une pile à combustible de type PEM est multiple et leurs caractéristiques doivent être choisies afin de répondre à un compromis entre plusieurs critères.

Tout d'abord, les couches de diffusion doivent être de bons conducteurs électriques et être suffisamment poreuses pour permettre le passage des gaz réactifs (H₂ et O₂ dans l'air et l'évacuation de l'eau produite. Elles doivent aussi être de bons conducteurs thermiques afin d'évacuer efficacement la chaleur et ne pas augmenter la température de fonctionnement de la pile, ce qui pourrait dans le cas contraire dégrader les membranes de la pile. Enfin, elles doivent être suffisamment rigides afin de servir de renfort mécanique aux AME du fait de l'architecture dents/canaux des plaques bipolaires et monopolaires de la pile.

La gestion de l'eau dans la pile à combustible est un point primordial pour avoir un bon fonctionnement et une fiabilité optimale des AME, et donc de la pile. Cette gestion de l'eau, assurée en grande partie par les couches de diffusion, est complexe, car, dans chaque AME :
- de l'eau doit être amenée à l'état gazeux jusqu'aux couches actives anodique et cathodique et jusqu'à la membrane ;
- l'eau produite à la cathode doit être au moins en partie renvoyée du côté anodique. Ce flux doit au moins partiellement compenser la migration de l'eau à la conduction protonique de l'anode à la cathode ;
- l'eau en excès, côtés anodique et cathodique, doit être évacuée jusqu'aux plaques bipolaires afin de ne pas empêcher l'accès des gaz vers les couches actives, ce qui pourrait conduire à un mauvais fonctionnement de la pile.

Il y a donc au sein de l'AME un équilibre complexe des flux d'eau dépendant des conditions de fonctionnement, des composants de l'AME, et notamment des couches de diffusion, ainsi que de l'architecture des plaques bipolaires.

Par ailleurs, la couche de diffusion doit être stable (chimiquement et physiquement) dans les conditions de fonctionnement de la pile à combustible. Les critères influençant la stabilité des matériaux sont la température, pouvant atteindre environ 120°C, l'humidité relative (HR), qui peut être de 100%, le pH, pouvant être égal à environ 1, l'activité des gaz (H₂ et O₂, dont les pressions peuvent atteindre environ 4 bars), et une différence de potentiels électriques qui peut être de 1,2 V entre l'anode et la cathode.

Ces contraintes se retrouvent également dans le cas des électrolyseurs de type PEM, avec dans ce cas une différence de potentiels électriques qui peut être comprise entre 1,2 V et 2,5 V, entre l'anode et la cathode.

Le support de diffusion d'une couche de diffusion se présente généralement sous forme de tissu (support de diffusion tissé), ou de papier ou de feutre (supports de diffusion non tissés) de fibres de carbone fabriqués par voie sèche ou humide.

Les papiers de carbone sont obtenus à partir d'une suspension de fibres de carbone cassées et de longueurs comprises entre environ 3 mm et 70 mm, et dispersées dans un solvant avec un liant polymère. La suspension est ensuite filtrée, ou les solvants sont évaporés, pour obtenir un matériau autosupporté qui est traité thermiquement pour carboniser le liant polymère. D'autres étapes d'imprégnation, de moulage et de traitement thermique peuvent être mises en oeuvre, comme décrit dans les documents EP 0 286 945 B1 et US 6 489 051 B1.

En raison du procédé de fabrication mis en oeuvre, ces papiers sont disponibles uniquement sous forme de feuilles, ce qui ne rend pas ces supports de diffusion facilement transportables. De plus, le nombre important d'étapes de fabrication et les traitements thermiques de carbonisation ou de graphitisation des matériaux mis en oeuvre de manière continue augmentent lourdement le coût d'une couche de diffusion à base de papier de carbone.

Le papier de carbone est plus rigide et a une structure plus homogène que le tissu. Toutefois, il est cassant et plus difficile à manipuler que le tissu.

Tout comme le tissu, les papiers de carbone présentent une anisotropie étant donné que les fibres de carbone sont orientées de manière aléatoire dans le papier. De plus, étant donné que les fibres sont réparties de manière aléatoire, la structure du support de diffusion n'est pas contrôlée, ce qui aboutit à une mauvaise reproductibilité des caractéristiques des supports de diffusion ainsi réalisés.

Les feutres de carbone sont obtenus par carbonisation d'un feutre de polymère précurseur réalisé par enchevêtrement de fibres de polymère. Un traitement thermique en continu de carbonisation ou graphitisation est également mis en oeuvre. Les feutres sont moins coûteux à réaliser que les papiers de carbone et les tissus et présentent une structure plus isotrope. Toutefois, leur coût reste important. De plus, l'enchevêtrement des fibres de carbone est réalisé de manière aléatoire par des jets de fluide sous pression aboutissant à une mauvaise reproductibilité des caractéristiques des supports de diffusion ainsi réalisés.

Le document FR 2 788 168 évoque l'utilisation de nappes unidirectionnelles de filaments de carbone solidarisées entre elles par aiguilletage pour réaliser une couche de diffusion d'un catalyseur électrochimique.

### EXPOSÉ DE L'INVENTION

Un but de la présente invention est de proposer un nouveau procédé de réalisation d'une couche de diffusion d'un dispositif électrochimique tel qu'une pile à combustible ou un électrolyseur de type PEM, faisant appel à plusieurs nappes unidirectionnelles de filaments de carbone, ne présentant pas les inconvénients des couches de diffusion de l'art antérieur, et améliorant les performances (augmentation de la conductivité électrique, réduction des résistances électriques de contact, ...) du dispositif électrochimique qui comporte une telle couche de diffusion.

Pour cela, la présente invention propose un procédé de réalisation d'une couche de diffusion d'un dispositif électrochimique, comportant au moins les étapes suivantes :
- superposition d'une pluralité de nappes unidirectionnelles de filaments de carbone, les filaments de carbone de chaque nappe unidirectionnelle étant disposés les uns à côté des autres et orientés de manière sensiblement parallèle les uns par rapport aux autres,
- aiguilletage des nappes unidirectionnelles, brisant une partie des filaments de carbone tels que des portions brisées desdits filaments de carbone soient enchevêtrées aux autres filaments de carbone des nappes unidirectionnelles,
- découpe d'au moins une partie de la pluralité de nappes unidirectionnelles, les filaments de carbone formant au moins une surface externe électriquement conductrice de la couche de diffusion,
et dans lequel l'étape d'aiguilletage est réalisée à travers toute l'épaisseur de la pluralité de nappes unidirectionnelles, et/ou à travers deux faces principales opposées de la pluralité de nappes unidirectionnelles, et/ou avec une densité d'impacts contre la pluralité de nappes unidirectionnelles comprise entre environ 100 et 300 impacts/cm².

Au cours d'un tel procédé, on réalise un aiguilletage dont les paramètres contrôlés permettent d'améliorer les performances du dispositif électrochimique utilisant la couche de diffusion réalisée selon ce procédé.

Une orientation des filaments de carbone d'au moins une première desdites nappes unidirectionnelles peut former un angle non nul par rapport à une orientation des filaments de carbone d'au moins une deuxième desdites nappes unidirectionnelles.

Préalablement à la superposition des nappes unidirectionnelles, les filaments de carbone peuvent être enduits d'un matériau apte à renforcer la tenue mécanique des filaments de carbone puis solidarisés les uns aux autre, formant les différentes nappes unidirectionnelles, ledit matériau de renfort étant éliminé après la solidarisation des filaments de carbone.

Le procédé peut comporter en outre une étape de traitement des filaments de carbone conférant aux filaments de carbone un caractère hydrophobe ou hydrophile.

Chacune des nappes unidirectionnelles peut avoir une épaisseur comprise entre environ 10 µm et 200 µm et/ou avoir une masse surfacique comprise entre environ 40 g/m² et 60 g/m².

Chaque filament de carbone peut avoir un diamètre compris entre environ 6 µm et 8 µm et/ou avoir une résistivité électrique comprise entre environ 0,8 Ω.cm et 1,8 Ω.cm.

Une orientation des filaments de carbone d'au moins une première desdites nappes unidirectionnelles peut former un angle non nul ou compris entre environ 10° et 95° ou compris entre environ 40° et 50° par rapport à une orientation des filaments de carbone d'au moins une deuxième desdites nappes unidirectionnelles de filaments de carbone.

La couche de diffusion peut comporter un nombre de nappes unidirectionnelles de filaments de carbone superposées supérieur ou égal à deux et inférieur ou égal à cinq.

La couche de diffusion peut comporter une première et une deuxième nappes unidirectionnelles de filaments de carbone telles que l'orientation des filaments de carbone de la première nappe unidirectionnelle forme un angle compris entre environ 0° et 20° par rapport à l'orientation des filaments de carbone de la deuxième nappe unidirectionnelle, et peut comporter en outre une troisième nappe unidirectionnelle de filaments de carbone disposée entre la première et la deuxième nappes unidirectionnelles de filaments de carbone telle que les orientations des filaments de carbone de la première et de la deuxième nappes unidirectionnelles forment chacune un angle compris entre environ 70° et 110° par rapport à l'orientation des filaments de carbone de la troisième nappe unidirectionnel.

La couche de diffusion peut comporter en outre une quatrième nappe unidirectionnelle de filaments de carbone disposée entre la première et la deuxième nappe unidirectionnelle de filaments de carbone telle que l'orientation des filaments de carbone de la quatrième nappe unidirectionnelle forme un angle compris entre environ 70° et 110° par rapport à chacune des orientations des filaments de carbone de la première et de la deuxième nappe unidirectionnelle.

Dans une variante, la couche de diffusion peut comporter quatre nappes unidirectionnelles de filaments de carbone superposées telles que l'orientation des filaments de carbone de chacune desdites quatre nappes unidirectionnelles forme un angle compris entre environ 25° et 65° par rapport à la ou les orientations des filaments de carbone de la ou des nappes unidirectionnelles adjacentes à ladite nappe unidirectionnelle.

L'invention concerne également un procédé de réalisation d'une cellule électrochimique à membrane échangeuse de protons, comportant au moins la mise en oeuvre d'un procédé de réalisation d'une couche de diffusion tel que décrit ci-dessus.

L'orientation des filaments de carbone d'au moins une des nappes unidirectionnelles de la couche de diffusion peut être sensiblement perpendiculaire à une direction d'une longueur d'au moins un canal d'une plaque monopolaire disposée en regard de la couche de diffusion.

L'invention concerne également un procédé de réalisation d'une pile à combustible à membrane échangeuse de protons, comportant au moins la mise en oeuvre d'un procédé de réalisation d'une cellule électrochimique tel que décrit ci-dessus.

L'invention concerne également un procédé de réalisation d'un électrolyseur à membrane échangeuse de protons, comportant au moins la mise en oeuvre d'un procédé de réalisation d'une cellule électrochimique tel que décrit ci-dessus.

Il est décrit une couche de diffusion d'un dispositif électrochimique comprenant au moins une partie d'une nappe unidirectionnelle de filaments de carbone solidarisés, par exemple les uns aux autres, orientés de manière sensiblement parallèle les uns par rapport aux autres et formant au moins une surface externe électriquement conductrice de la couche de diffusion.

Contrairement aux couches de diffusion comprenant un support de diffusion à base de papier de carbone ou de feutre de carbone, qui font appel à des fibres de carbone non continues d'une longueur comprise entre environ 3 mm et 70 mm et dispersées de manière aléatoire, une telle couche de diffusion est réalisée à partir d'au moins une nappe unidirectionnelle de filaments de carbone orientés parallèlement les uns par rapport aux autres.

Une telle couche de diffusion est moins coûteuse à réaliser compte tenu du coût de réalisation plus faible d'une nappe unidirectionnelle de filaments de carbone par rapport à du papier de carbone ou du feutre de carbone, notamment en raison du nombre d'étapes moins important devant être mises en oeuvre pour réaliser une telle nappe par rapport à la réalisation de papiers de carbone ou de feutres de carbone. De plus, contrairement aux papiers de carbone ou aux feutres de carbone, une telle couche de diffusion ne nécessite pas de traitement thermique mis en oeuvre de manière continue pour sa réalisation compte tenu de l'utilisation de filaments de carbone qui ne nécessitent pas de traitement de carbonisation ou de graphitisation, ce qui permet d'en réduire sensiblement le coût de fabrication.

Par rapport à du papier de carbone, une telle nappe unidirectionnelle de filaments de carbone est également facilement manipulable et facilement transportable, par exemple sous la forme de rouleaux, ce qui est un avantage lors de la réalisation de la couche de diffusion.

De plus, la répartition et l'orientation régulières des filaments de carbone dans la couche de diffusion permet d'avoir une bonne reproductibilité de la structure de la couche de diffusion, et donc des caractéristiques de la couche de diffusion, contrairement aux papiers de carbone et aux feutres de carbone.

Une telle couche de diffusion remplit également tous les critères répondant aux besoins des piles à combustibles et des électrolyseurs de type PEM : bonne porosité pour permettre le passage des réactifs et l'évacuation des produits, faible épaisseur permettant de réduire la résistivité électrique de la couche de diffusion, bonne adaptabilité de la couche de diffusion par rapport aux variations de l'humidité relative dans une pile à combustible.

Par rapport aux couches de diffusion de l'art antérieur, la structure d'une telle couche de diffusion est mieux contrôlée, notamment en termes d'épaisseur et de porosité, en raison de la régularité dans l'orientation des filaments de carbone.

La nappe unidirectionnelle de filaments de carbone peut avoir une épaisseur comprise entre environ 10 µm et 200 µm et/ou avoir une masse surfacique comprise entre environ 40 g/m² et 60g/m². Une telle épaisseur confère une faible résistance électrique à la couche de diffusion. L'épaisseur de la couche de diffusion peut être choisie avantageusement la plus faible possible.

Chaque filament de carbone peut avoir un diamètre compris entre environ 6 µm et 8 µm et/ou avoir une résistivité électrique comprise entre environ 0,8 Ω.cm et 1,8 Ω.cm.

Pour obtenir les filaments de carbone, il est possible d'utiliser des fils de carbone comportant par exemple chacun entre environ 1000 et 320000 filaments de carbone, et avantageusement entre environ 12000 et 48000 filaments de carbone. En utilisant des filaments de carbone issus de fils comportant un nombre important de filaments de carbone, on réduit encore le coût de réalisation de la couche de diffusion étant donné que de tels fils sont moins coûteux à réaliser que des fils comportant un nombre moins important de filaments de carbone.

La couche de diffusion peut comporter une pluralité de nappes unidirectionnelles de filaments de carbone superposées, les filaments de carbone de chaque nappe unidirectionnelle pouvant être orientés de manière sensiblement parallèle les uns par rapport aux autres, et telles qu'une orientation des filaments de carbone d'au moins une première desdites nappes unidirectionnelles forme un angle non nul ou compris entre environ 10° et 95° ou avantageusement compris entre environ 40° et 50° par rapport à une orientation des filaments de carbone d'au moins une deuxième desdites nappes unidirectionnelles de filaments de carbone. Une telle orientation des nappes unidirectionnelles entre elles permet de former une couche de diffusion présentant une excellente porosité pour le passage des gaz et l'évacuation de l'eau lorsque la couche de diffusion est utilisée dans une pile à combustible, ou le passage de l'eau et l'évacuation des gaz lorsque la couche de diffusion est utilisée dans un électrolyseur.

La couche de diffusion peut comporter un nombre de nappes unidirectionnelles de filaments de carbone superposées supérieur ou égal à deux et inférieur ou égal à cinq.

La couche de diffusion peut comporter une première et une deuxième nappe unidirectionnelle de filaments de carbone telles que l'orientation des filaments de carbone de la première nappe unidirectionnelle forme un angle compris entre environ 0° et 20° par rapport à l'orientation des filaments de carbone de la deuxième nappe unidirectionnelle, et peut comporter en outre une troisième nappe unidirectionnelle de filaments de carbone disposée entre la première et la deuxième nappe unidirectionnelle de filaments de carbone telle que les orientations des filaments de carbone de la première et de la deuxième nappe unidirectionnelle forment chacune un angle compris entre environ 70° et 110° par rapport à l'orientation des filaments de carbone de la troisième nappe unidirectionnel.

La couche de diffusion peut comporter en outre une quatrième nappe unidirectionnelle de filaments de carbone disposée entre la première et la deuxième nappe unidirectionnelle de filaments de carbone telle que l'orientation des filaments de carbone de la quatrième nappe unidirectionnelle forme un angle compris entre environ 70° et 110° par rapport à chacune des orientations des filaments de carbone de la première et de la deuxième nappe unidirectionnelle.

Dans une variante, la couche de diffusion peut comporter quatre nappes unidirectionnelles de filaments de carbone superposées telles que l'orientation des filaments de carbone de chacune desdites quatre nappes unidirectionnelles forme un angle compris entre environ 25° et 65° par rapport à la ou les orientations des filaments de carbone de la ou des nappes unidirectionnelles adjacentes à ladite nappe unidirectionnelle.

Une partie des filaments de carbone peuvent être brisés tels que des portions brisées desdits filaments de carbone soient enchevêtrées aux autres filaments de carbone des nappes unidirectionnelles, assurant ainsi un maintien mécanique des nappes unidirectionnelles entre elles. Cette configuration peut correspondre au résultat d'une opération d'aiguilletage réalisée dans les nappes unidirectionnelles de filaments de carbone, opération qui permet notamment d'améliorer le maintien mécanique des nappes unidirectionnelles de filaments de carbone superposées afin de pouvoir les manipuler plus facilement sans détruire la structure formée par la superposition de nappes unidirectionnelles, c'est-à-dire sans modifier les angles formés entre les orientations des filaments de carbone des différentes nappes.

La couche de diffusion peut présenter une énergie de surface à caractère hydrophobe, par exemple lorsque la couche de diffusion est destinée à être utilisée dans une pile à combustible, ou hydrophile, par exemple lorsque la couche de diffusion est destinée à être utilisée dans un électrolyseur. Un tel caractère hydrophobe peut être par exemple obtenu en traitant la ou les nappes unidirectionnelles de filaments de carbone par du polytétrafluoroéthylène. Un caractère hydrophile peut être obtenu par un traitement de la ou des nappes unidirectionnelles de filaments de carbone par une résine époxy.

La couche de diffusion peut comporter deux faces principales électriquement conductrice.

Il est également décrit une cellule électrochimique à membrane échangeuse de protons, comportant au moins une couche de diffusion telle que décrite précédemment.

L'orientation des filaments de carbone de la ou d'au moins une des nappes unidirectionnelles de filaments de carbone de la couche de diffusion peut être sensiblement perpendiculaire à une direction d'une longueur d'au moins un canal d'une plaque monopolaire disposée en regard de la couche de diffusion.

Il est également décrit une pile à combustible à membrane échangeuse de protons, comportant au moins une couche de diffusion telle que décrite précédemment.

Il est également décrit une pile à combustible à membrane échangeuse de protons, comportant au moins une cellule électrochimique telle que décrite précédemment.

Il est également décrit un électrolyseur à membrane échangeuse de protons, comportant au moins une couche de diffusion telle que décrite précédemment.

Il est également décrit un électrolyseur à membrane échangeuse de protons, comportant au moins une cellule électrochimique telle que décrite précédemment.

Il est proposé en outre une utilisation d'au moins une partie d'une nappe unidirectionnelle de filaments de carbone solidarisés, par exemple les uns aux autres, et orientés de manière sensiblement parallèle les uns par rapport aux autres pour former une couche de diffusion d'un dispositif électrochimique, ladite partie de nappe unidirectionnelle de filaments de carbone formant au moins une surface externe électriquement conductrice de la couche de diffusion.

Il est aussi décrit un procédé de réalisation d'une couche de diffusion d'un dispositif électrochimique, comportant au moins les étapes suivantes :
- disposition de filaments de carbone les uns à côté des autres et orientés de manière sensiblement parallèle les uns par rapport aux autres,
- solidarisation des filaments de carbone, par exemple les uns aux autres, formant une nappe unidirectionnelle de filaments de carbone,
- découpe d'au moins une partie de la nappe unidirectionnelle,

les filaments de carbone formant au moins une surface externe électriquement conductrice de la couche de diffusion.

Le procédé peut comporter en outre, entre les étapes de solidarisation et de découpe, une étape de superposition d'une pluralité de nappes unidirectionnelles de filaments de carbone, les filaments de carbone de chaque nappe unidirectionnelle étant orientés de manière sensiblement parallèle les uns par rapport aux autres, et telles qu'une orientation des filaments de carbone d'au moins une première desdites nappes unidirectionnelles forme un angle non nul ou compris entre environ 10° et 95° ou compris entre environ 40° et 50° par rapport à une orientation des filaments de carbone d'au moins une deuxième desdites nappes unidirectionnelles de filaments de carbone, l'étape de découpe pouvant comporter la découpe d'au moins une partie de la pluralité de nappes unidirectionnelles.

L'ensemble des filaments de carbone des différentes nappes unidirectionnelles superposées et destinées à former la couche de diffusion peuvent donc être découpés par la mise en oeuvre d'une seule étape de découpe. Ainsi, cette unique étape de découpe permet de réduire le coût du procédé de réalisation de la couche de diffusion.

Le procédé peut comporter en outre, entre les étapes de solidarisation et de découpe, et lorsque le procédé comporte une étape de superposition d'au moins trois nappes unidirectionnelles de filaments de carbone, la mise en oeuvre d'un aiguilletage des nappes unidirectionnelles de filaments de carbone, brisant une partie des filaments de carbone tels que des portions brisées desdits filaments de carbone soient enchevêtrées aux autres filaments de carbone des nappes unidirectionnelles, assurant un maintien mécanique des nappes unidirectionnelles entre elles. Dans une variante, ce maintien mécanique peut être obtenu en faisant passer les nappes unidirectionnelles de filaments de carbone sous des jets d'eau sous pression brisant une partie des filaments de carbone tels que des portions brisées desdits filaments de carbone soient enchevêtrées aux autres filaments de carbone des nappes unidirectionnelles.

Préalablement à la mise en oeuvre de l'étape de disposition des filaments de carbone les uns à côté des autres, les filaments de carbone peuvent être enduits d'un matériau, par exemple une résine et/ou un durcisseur, apte à renforcer la tenue mécanique des filaments de carbone, et le procédé peut comporter en outre, après l'étape de solidarisation, une étape d'élimination dudit matériau. En effet, les filaments de carbone, par exemple ceux obtenus à partir de précurseurs à base de Polyacrilonitrile (PAN), peuvent être fragiles. Ainsi, pour pouvoir les manipuler plus facilement lors de la fabrication des nappes unidirectionnelles, les filaments de carbone peuvent subir un traitement appelé ensimage, consistant à les enduire d'un matériau renforçant la tenue mécanique des filaments de carbone, par exemple de la résine époxy. Ce matériau peut être ensuite éliminé après la solidarisation des filaments de carbone entre eux, et par exemple avant la découpe de la ou des nappes unidirectionnelles de filaments de carbone.

Le procédé peut comporter en outre, après l'étape de solidarisation, une étape de traitement des filaments de carbone conférant aux filaments de carbone un caractère hydrophobe ou hydrophile. Un tel caractère hydrophobe peut être obtenu en traitant les filaments de carbone par du polytétrafluoroéthylène, par exemple en les trempant dans une solution d'un tel matériau. Un caractère hydrophile peut être obtenu en traitant les filaments de carbone par une résine époxy.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement une cellule électrochimique d'un dispositif électrochimique tel qu'une pile à combustible ou un électrolyseur de type PEM,
- la figure 2 représente schématiquement un dispositif électrochimique tel qu'une pile à combustible ou un électrolyseur de type PEM,
- les figures 3A et 3B représentent des vues de dessus et en coupe d'une partie d'une nappe unidirectionnelle de filaments de carbone d'une couche de diffusion selon un mode de réalisation particulier,
- la figure 4 représente une vue en coupe d'un fil comportant des filaments de carbone utilisés dans une couche de diffusion selon un mode de réalisation particulier,
- la figure 5 représente une vue de dessus d'une nappe unidirectionnelle de filaments de carbone utilisée lors de la réalisation d'une couche de diffusion selon un mode de réalisation particulier,
- la figure 6 représente une couche de diffusion selon un mode de réalisation particulier,
- les figures 7A et 7B représentent une nappe multiaxiale de filaments de carbone formant une couche de diffusion selon un mode de réalisation particulier,
- la figure 8 représente les courbes de polarisation d'une cellule électrochimique comportant des couches de diffusion réalisées à partir de nappes de filaments de carbone, et d'une cellule électrochimique de l'art antérieur comportant des couches de diffusion à base de feutre de carbone,
- les figures 9A et 9B représentent les courbes de polarisation de cellules électrochimiques comportant des couches de diffusion réalisées à partir de nappes unidirectionnelles de filaments de carbone aiguilletées.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

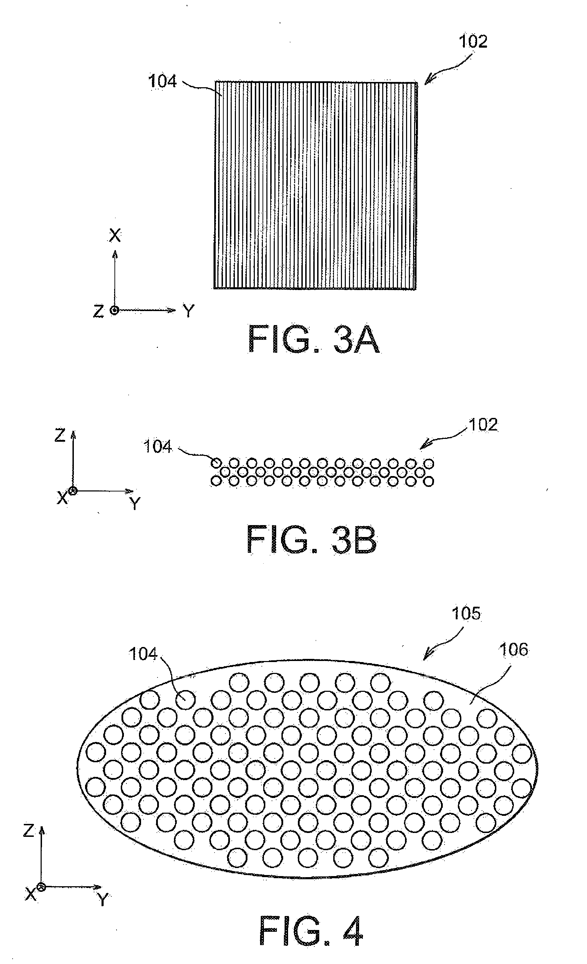

On se réfère tout d'abord aux figures 3A et 3B sur lesquelles est représentée une partie d'une nappe unidirectionnelle 102 de filaments de carbone 104 faisant partie d'une couche de diffusion selon un mode de réalisation particulier.

La nappe 102 est formée par une pluralité de filaments continus de carbone 104 disposés sensiblement les uns à côté des autres et tous orientés dans une même direction parallèlement à l'axe x. Sur les figures 3A et 3B, seule une partie de la nappe unidirectionnelle 102 est représentée. La nappe unidirectionnelle 102 a une épaisseur (dimension selon l'axe z, correspondant à la plus petite dimension de la nappe par rapport aux autres dimensions, à savoir la longueur et la largeur de la nappe) comprise entre environ 10 µm et 200 µm, cette épaisseur dépendant du diamètre des filaments de carbone 104 ainsi que du nombre maximum de filaments de carbone 104 se retrouvant superposés les uns au-dessus des autres dans la nappe unidirectionnelle 102. Une telle nappe 102 comporte donc un nombre de filaments de carbone 104 qui dépend du grammage désiré et de la largeur de la nappe 102. L'épaisseur de la nappe unidirectionnelle 102 pourra être choisie la plus faible possible afin que la nappe 102 présente une résistance électrique la plus faible possible et que la couche de diffusion qui est réalisée à partir de la nappe unidirectionnelle 102 ait la plus faible épaisseur possible. La masse surfacique de la nappe unidirectionnelle 102 est par exemple comprise entre 40 g/m² et 60 g/m².

Les filaments de carbone 104 de la nappe unidirectionnelle 102 sont par exemple à base de Polyacrilonitrile (PAN). Les filaments de carbone 104 peuvent être initialement regroupés sous la forme de fils. Un tel fil 105 est représenté en coupe sur la figure 4. Le fil 105 se compose d'une pluralité de filaments de carbone 104 s'étendant dans une direction parallèle à la longueur du fil (selon l'axe x sur l'exemple de la figure 4) et noyés dans une gaine 106 à base de résine. Chaque fil 105 peut comporter entre environ 1000 et 320000 filaments de carbone 104. On peut choisir, pour la réalisation de la nappe 102, des fils 105 comportant le plus grand nombre possible de filaments de carbone 106 en raison de leur coût moins élevé. On choisira de préférence des fils 105 comportant entre environ 3000 et 24000 filaments de carbone 104.

Les filaments de carbone 104 utilisés pour former la nappe unidirectionnelle 102 ont par exemple un diamètre compris entre 6 µm et 8 µm et une résistivité électrique comprise entre 0,8 Ω.cm et 1,8 Ω.cm.

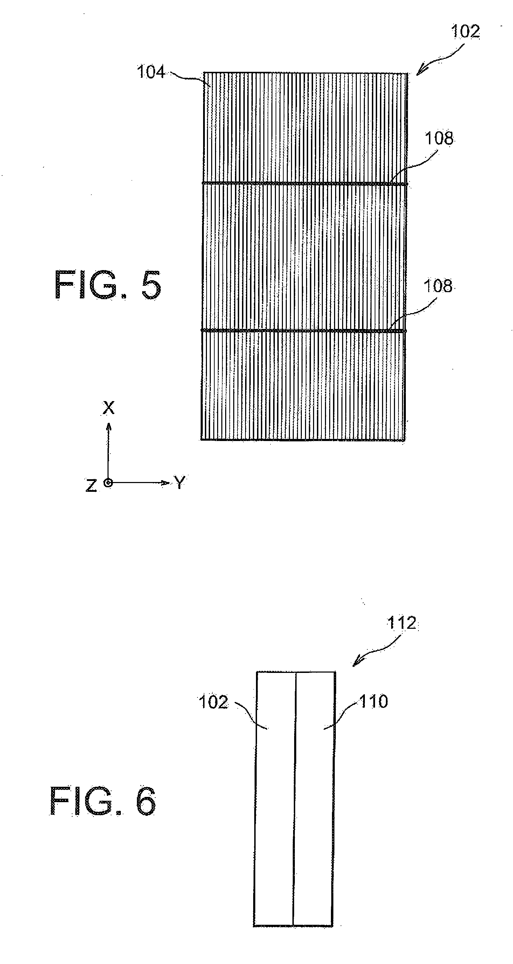

Au cours de la réalisation de la nappe 102, les filaments de carbone 104 sont solidarisés les uns aux autres, par exemple par des fils 108 à base d'un matériau thermofusible disposés transversalement à la direction des filaments de carbone 104, sur les filaments de carbone 104 (figure 5). Il est également possible que les, filaments de carbone 104 soient solidarisés par l'intermédiaire d'un cadre, par exemple à base d'un matériau électriquement conducteur tel que du métal, pouvant former en outre un contour de la couche de diffusion.

Comme représenté sur la figure 6, une partie de la nappe unidirectionnelle 102 est découpée et utilisée comme support de diffusion qui peut ensuite être solidarisé à une couche microporeuse 110 pour former une couche de diffusion 112. Il est toutefois possible de ne pas utiliser de couche microporeuse 110, la couche de diffusion 112 n'étant alors formée que par les filaments de carbone 104. Des couches de diffusion similaires à la couche de diffusion 112 sont utilisées pour réaliser des cellules électrochimiques élémentaires, de structure analogue à la cellule électrochimique 10 précédemment décrite en liaison avec la figure 1, ces cellules étant ensuite assemblées pour former un dispositif électrochimique tel qu'une pile à combustible PEM ou un électrolyseur PEM, de structure analogue au dispositif électrochimique 50 précédemment décrit en liaison avec la figure 2.

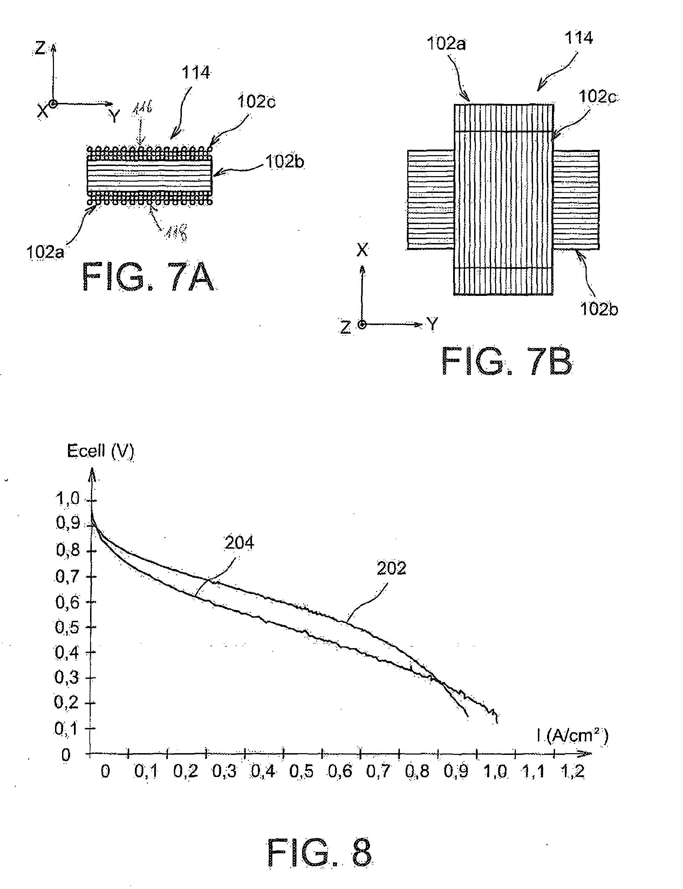

La couche de diffusion est formée à partir de plusieurs nappes unidirectionnelles de filaments de carbone superposées et formant une nappe multiaxiale de filaments de carbone. Une telle nappe multiaxiale 114 est représentée sur les figures 7A et 7B.

La nappe multiaxiale 114 représentée sur la figures 7A et 7B est formée par la superposition et l'assemblage de trois nappes unidirectionnelles 102a, 102b et 102c par exemple similaires à la nappe unidirectionnelle 102 précédemment décrite. Une première nappe 102a est disposée telle que les filaments de carbone de cette nappe 102a soient orientés selon une première direction (parallèle à l'axe x sur l'exemple des figures 7A et 7B). Une deuxième nappe unidirectionnelle 102b est superposée sur la première nappe 102a telle que les filaments de carbone de cette deuxième nappe 102b soient orientés selon une seconde direction, avantageusement perpendiculaire à la première direction (parallèle à l'axe y sur l'exemple des figures 7A et 7B). Enfin, une troisième nappe unidirectionnelle 102c est superposée sur la deuxième nappe 102b telle que les filaments de carbone de cette troisième nappe 102c soient orientés selon une troisième direction perpendiculaire à la deuxième direction et parallèle à la première direction.

La couche de diffusion est ensuite achevée en découpant la surface souhaitée dans la nappe multiaxiale 114 pour former la couche de diffusion. La surface découpée de chaque nappe unidirectionnelle 102a, 102b et 102c formant la nappe multiaxiale 114 est sensiblement égale à la surface de la couche de diffusion afin que la totalité de la surface de la couche de diffusion soit formée par la superposition des différentes nappes unidirectionnelles. De manière optionnelle, la partie découpée de la nappe multiaxiale 114 peut être solidarisée à une couche microporeuse, par exemple à base de carbone et/ou d'un ou plusieurs autres matériaux par exemple hydrophobes.

La nappe multiaxiale précédemment décrite n'est qu'un exemple de réalisation possible. De manière générale, la couche de diffusion peut comporter une ou plusieurs nappes unidirectionnelles de filaments de carbone superposées. De préférence, la nappe multiaxiale peut comporter entre une et cinq nappes unidirectionnelles, et préférentiellement entre une et quatre, ou entre deux et cinq nappes unidirectionnelles. L'épaisseur totale de la couche de diffusion ainsi obtenue a une épaisseur préférentiellement comprise entre environ 10 µm et 800 µm. Enfin, les orientations des nappes utilisées peuvent être différentes de l'exemple précédemment décrit.

On décrit maintenant les étapes mises en oeuvre pour réaliser la couche de diffusion précédemment décrite.

La ou les nappes unidirectionnelles 102 sont chacune réalisées indépendamment en étalant côte à côte, de manière sensiblement uniforme, des filaments de carbone 104.

Les filaments de carbone de la nappe ou de chacune des nappes sont ensuite solidarisés les uns aux autres, par exemple par des fils à base d'un matériau thermofusible disposés transversalement aux filaments de carbone de la nappe, tel que décrit précédemment en liaison avec la figure 5. Il est également possible, en variante, d'utiliser un cadre par exemple métallique pour solidariser les filaments de carbone.

Lorsque le support de diffusion est destiné à être formé par une nappe multiaxiale de filaments de carbone, les nappes unidirectionnelles sont alors superposées les unes sur les autres, par exemple comme sur l'exemple des figures 7A et 7B, l'orientation des filaments de carbone pouvant être différente d'une nappe unidirectionnelle à une autre.

Une fois que les nappes unidirectionnelles sont superposées les unes sur les autres, elles peuvent subir une opération dite d'aiguilletage consistant à briser une partie des filaments dans une direction perpendiculaire à l'ensemble des orientations des filaments de carbone des différentes nappes unidirectionnelles, c'est-à-dire dans une direction parallèle à l'épaisseur de la nappe multiaxiale réalisée (parallèlement à l'axe z sur les exemples des figures 5 et 7A, 7B) en utilisant par exemple des aiguilles, elles-mêmes fixées sur un plateau, venant traverser à intervalles réguliers la nappe multiaxiale qui se déplace relativement aux aiguilles, créant des impacts à travers les nappes unidirectionnelles de filaments de carbone. Cette opération d'aiguilletage permet de maintenir mécaniquement les nappes superposées entre elles afin de pouvoir les manipuler sans modifier la structure formée par la superposition, ou le drapage, des différentes nappes unidirectionnelles. Pour cela, les aiguilles sont par exemple enfoncées dans la nappe de filaments de carbone sur une profondeur comprise entre 10 mm et 16 mm, ou à travers toute l'épaisseur de la nappe multiaxiale, avec une densité de coups, ou d'impacts, comprise entre 100 coups/cm² et 140 coups/cm², ou comprise entre 100 et 300 impacts/cm². La machine à aiguilleter est par exemple de type ASSELIN et les aiguilles sont par exemple des aiguilles SINGER type 15x18x32 3,5 BL RB 30 A06/15 montées sur une planche présentant une hauteur, par rapport aux nappes de filaments de carbone, inférieure à environ 15 mm ou 20 mm. Les aiguilles utilisées peuvent avoir des dimensions latérales (dimensions perpendiculaires à l'épaisseur des nappes unidirectionnelles) comprises entre environ 0,5 mm et 3 mm. De plus, les aiguilles peuvent avoir une hauteur leur permettant de traverser toute l'épaisseur des nappes unidirectionnelles.

En variante, l'opération d'aiguilletage peut être réalisée de manière hydraulique, les aiguilles étant dans ce cas remplacées par exemple par des jets d'air ou d'eau.

Les filaments de carbone, notamment ceux obtenus à partir de précurseurs à base de PAN, sont fragiles. Ainsi, pour pouvoir renforcer leur tenue mécanique et ainsi les manipuler plus facilement sans risque de casse lors de la fabrication des nappes unidirectionnelles, les filaments de carbone peuvent subir un traitement appelé ensimage. Cet ensimage, qui est réalisé au niveau des filaments de carbone préalablement à la formation des nappes unidirectionnelles, consiste à enduire les filaments de carbone d'une résine, par exemple à base d'époxy. Cette résine peut ensuite être éliminée par un traitement thermique (désensimage). Ce traitement thermique comporte par exemple la mise en oeuvre des étapes suivantes (les filaments de carbone sont initialement à température ambiante) :
- augmentation de la température, pendant environ 16 minutes, jusqu'à atteindre environ 100°C,
- maintien de la température à environ 100° pendant environ 20 minutes,
- augmentation de la température, pendant environ 30 minutes, jusqu'à atteindre environ 268°C,
- maintien de la température à environ 268°C pendant environ 30 minutes,
- augmentation de la température, pendant environ 12 minutes, jusqu'à atteindre environ 340°C,
- maintien de la température à environ 340°C pendant environ 40 minutes,
- augmentation de la température, pendant environ 40 minutes, jusqu'à atteindre environ 425°C,
- maintien de la température à environ 425°C pendant environ 20 minutes,
- retour à la température ambiante.

Après un tel traitement thermique de désensimage, la résine se retrouve transformée en un matériau entièrement à base de carbone.

Cette étape de désensimage peut permettre de donner également un caractère hydrophile à la couche de diffusion et permet par conséquent d'avoir une couche de diffusion pouvant fonctionner dans un environnement à faible humidité relative, par exemple comprise entre environ 0 % et 50 %.

Lorsque des fils de filaments de carbone sont initialement utilisés pour réaliser les nappes unidirectionnelles, le matériau des gaines des fils peut être également être supprimé lors de cette étape de désensimage.

Ce désensimage peut également être réalisé par d'autres types de traitement, par exemple un traitement chimique ou par UV.

D'autres traitements du support de diffusion, permettant de modifier l'énergie de surface des filaments de carbone, peuvent également être mis en oeuvre afin de conférer à ces filaments un caractère hydrophobe ou hydrophile selon l'application envisagée.

Après ces traitements, la couche de diffusion peut éventuellement être assemblée à une couche microporeuse avant d'être assemblée aux autres éléments pour réaliser le dispositif électrochimique.

Les nappes de fibres de carbone pourront par exemple être réalisées selon le procédé décrit dans le document WO 98/44183 qui décrit la réalisation de nappes de fibres de carbone utilisées pour réaliser des matériaux composites.

On décrit ci-dessous plusieurs exemples de réalisation de nappes multiaxiales de filaments de carbone utilisées pour former des couches de diffusion de pile à combustible PEM.

### Exemple 1 :

Les filaments de carbone utilisés sont à base de PAN, de haute résistance et issus de fils de type 12K (12000 filaments par fil). Les filaments de carbone utilisés sont par exemple choisis tels qu'ils présentent les propriétés physiques suivantes :
Résistance à la traction : 4900 MPa ;
Module de traction : 230 GPa ;
Elongation : 2,1 % ;
Masse/unité de longueur : 800 Tex (g/km) ;
Densité : 1,8 g/cm³.

Ces filaments de carbone sont traités par un ensimage réalisé avec une résine époxy.

Les nappes unidirectionnelles sont ensuite réalisées à partir de ces filaments de carbone. Les nappes unidirectionnelles obtenues ont ici une masse surfacique d'environ 50 g/m².

Les filaments de carbone de chaque nappe sont ensuite solidarisés par des fils à base d'un matériau thermofusible disposés transversalement aux filaments de carbone de la nappe, similaires aux fils 108 représentés sur la figure 5.

On réalise ensuite un empilement de trois nappes unidirectionnelles obtenues comme décrit ci-dessus. Ces trois nappes unidirectionnelles sont orientées les unes par rapport aux autres comme sur l'exemple précédemment décrit en liaison avec les figures 7A et 7B. Ainsi, la seconde nappe est orientée perpendiculairement à la première nappe, la troisième nappe étant orientée parallèlement à la première nappe. On obtient une nappe multiaxiale ayant des filaments de carbone orientés, en prenant comme référence l'orientation des filaments de carbone de la première nappe, selon la configuration suivante : 0°/90°/0°.

Les valeurs des angles formés entre les filaments de carbone des différentes nappes peuvent également être différentes de celles indiquées ci-dessus.

Un aiguilletage est ensuite mis en oeuvre avec un plateau contenant environ 4000 aiguilles par mètre de largeur, chaque aiguille ayant une longueur d'environ 20 mm et possédant une extrémité de forme triangulaire et de longueur égale à environ 0,15 mm. Lors de l'aiguilletage, le plateau est réglé de façon à avoir une profondeur de pénétration des aiguilles dans la nappe multiaxiale d'environ 12 mm à une cadence d'environ 138 coups/cm². La machine à aiguilleter est par exemple de type ASSELIN et les aiguilles sont par exemple des aiguilles SINGER type 15x18x32 3,5 BL RB 30 A06/15 montées sur une planche disposée à une hauteur, par rapport aux nappes de filaments de carbone, inférieure à environ 15 mm ou 20 mm.

On élimine ensuite l'ensimage et les fils thermofusibles de la nappe multiaxiale par un traitement thermique par exemple similaire à celui précédemment décrit.

### Exemple 2 :

Des nappes unidirectionnelles sont tout d'abord réalisées de manière analogue au premier exemple précédemment décrit, à partir de filaments de carbone similaires.

On réalise ensuite un empilement de quatre nappes unidirectionnelles. La deuxième nappe est disposée sur la première nappe de manière à ce que l'orientation de ses filaments de carbone forme un angle d'environ 45° par rapport à l'orientation des filaments de carbone de la première nappe. La troisième nappe est disposée sur la deuxième nappe de manière à ce que l'orientation de ses filaments de carbone forme un angle d'environ 45° par rapport à l'orientation des filaments de carbone de la deuxième nappe et d'environ 90° par rapport à l'orientation des filaments de carbone de la première nappe. Enfin, la quatrième nappe est disposée sur la troisième nappe de manière à ce que l'orientation de ses filaments de carbone forme un angle d'environ 45° par rapport à l'orientation des filaments de carbone de la troisième nappe et d'environ 135° par rapport à l'orientation des filaments de carbone de la première nappe. Cet empilement forme une nappe multiaxiale ayant des filaments de carbone orientés, en prenant comme référence l'orientation des filaments de carbone de la première nappe, selon la configuration 0°/45°/90°/135°.

On réalise ensuite un aiguilletage et un désensimage de manière analogue au premier exemple de réalisation décrit ci-dessus.

### Exemple 3

Des nappes unidirectionnelles sont tout d'abord réalisées de manière analogue au premier exemple précédemment décrit, à partir de filaments de carbone similaires.

On réalise ensuite un empilement de quatre nappes unidirectionnelles. La deuxième nappe est disposée sur la première nappe de manière à ce que l'orientation de ses filaments de carbone forme un angle d'environ 90° par rapport à l'orientation des filaments de carbone de la première nappe. La troisième nappe est disposée sur la deuxième nappe de manière à ce que l'orientation de ses filaments de carbone forme un angle d'environ 90° par rapport à l'orientation des filaments de carbone de la première nappe (les filaments de carbone de la deuxième nappe étant parallèles aux filaments de carbone de la troisième nappe). Enfin, la quatrième nappe est disposée sur la troisième nappe de manière à ce que l'orientation de ses filaments de carbone forme un angle sensiblement nul par rapport à l'orientation des filaments de carbone de la première nappe. Cet empilement forme une nappe multiaxiale ayant des filaments de carbone orientés, en prenant comme référence l'orientation des filaments de carbone de la première nappe, selon une configuration 0°/90°/90°/0°.

On réalise ensuite un aiguilletage et un désensimage de manière analogue au premier exemple de réalisation décrit ci-dessus.

Dans une variante des exemples décrit ci-dessus, il est possible de ne pas solidariser les filaments de carbone par des fils à base d'un matériau thermofusible mais par de la résine époxyde déposée transversalement à la direction des filaments de carbone. Dans ce cas, on élimine l'ensimage préalablement à la mise en oeuvre de cette solidarisation. Les nappes unidirectionnelles de filaments de carbone sont ensuite superposées selon la configuration souhaitée.

Dans une autre variante, les filaments de carbone peuvent être solidarisés par un cadre à base d'un matériau électriquement conducteur tel qu'un métal ou par l'intermédiaire de pinces venant maintenir les extrémités des filaments de carbone. Il est par exemple possible d'utiliser un système de maintien dans la ligne de production permettant d'obtenir une surface assez importante. Dans ce cas, les filaments de carbone peuvent être tendus et maintenus par une pièce métallique pinçant les filaments de façon transversale à la direction des filaments.

On décrit maintenant un exemple de réalisation d'une cellule électrochimique qui est par exemple destinée à être utilisée dans une pile à combustible PEM.

On réalise tout d'abord une première couche de diffusion en découpant une partie de la nappe multiaxiale de filaments de carbone selon l'exemple n°2 précédemment décrit, de forme sensiblement carrée et de surface égale à environ 25 cm².

Cette première couche de diffusion est disposée du côté cathode de la cellule. Cette couche de diffusion est disposée, dans la cellule, de sorte à avoir la partie issue de la première nappe de filaments de carbone adjacente aux canaux de la plaque monopolaire cathodique et de telle sorte que la direction 0° (orientation des filaments de carbone de la partie issue de la première nappe de filaments de carbone) soit perpendiculaire à la longueur des canaux, cette longueur représentant la direction principale des canaux.

On réalise ensuite une seconde couche de diffusion en découpant une partie de la nappe multiaxiale de filaments de carbone selon l'exemple n°3 précédemment décrit, de forme sensiblement carrée et de surface égale à environ 25 cm².

Cette seconde couche de diffusion est disposée du côté anode de la cellule. Cette couche de diffusion est disposée, dans la cellule, de sorte à avoir la partie issue de la première ou de quatrième nappe de filaments de carbone adjacente aux canaux de la plaque monopolaire anodique et de telle sorte que la direction 0° (orientation des filaments de carbone de la partie issue de la première ou de la quatrième nappe de filaments de carbone) soit perpendiculaire à la longueur des canaux.

Les couches de diffusion présentent une surface électriquement conductrice vis-à-vis des plaques monopolaires de la cellule électrochimique.

Les performances d'une telle cellule électrochimique sont obtenues à faible humidité relative (environ 30 %) et à co-courant en hydrogène/air à une température d'environ 80°C, à une pression d'environ 1,5 bar, dont les stoechiométries sont : S_{H2} = 15 et S_{O2} = 7, la cellule étant serrée à une pression égale à environ 1 MPa. Ces performances sont testées en mesurant une courbe de polarisation de la cellule correspondant à la valeur de la tension obtenue aux bornes de la cellule en fonction du courant la traversant.

La courbe de polarisation 202 de cette cellule électrochimique est représentée sur la figure 8 et est comparée à une courbe de polarisation 204 mesurée pour une cellule électrochimique de structure analogue exceptée pour les couches de diffusion qui sont réalisées à partir de feutres de carbone. On voit sur cette figure 8 que la tension obtenue avec une cellule comportant des couches de diffusion réalisées à partir de nappes de filaments de carbone est supérieure à celle obtenue avec une cellule comportant des couches de diffusion réalisées à partir de feutres de carbone, pour un courant allant d'environ 0 à environ 0,85 A/cm². Ainsi, une pile à combustible PEM comportant un empilement de cellules électrochimiques à couches de diffusion réalisées à partir de nappes unidirectionnelles de filaments de carbone, ou plus généralement tout dispositif électrochimique comportant au moins une telle couche de diffusion, permet de fournir, à courant équivalent, une tension plus importante à ses bornes que lorsque les couches de diffusion sont réalisées à partir de feutres de carbone.

En plus de la fonction de maintien des nappes unidirectionnelles entre elles, l'opération d'aiguilletage permet d'améliorer les performances d'une cellule électrochimique comportant une couche de diffusion formée par des nappes unidirectionnelles de filaments de carbone ayant subies une telle opération d'aiguilletage, par rapport à une cellule électrochimique comportant une couche de diffusion formée par ces mêmes nappes unidirectionnelles de filaments de carbone mais n'ayant pas subies une opération d'aiguilletage. Cette amélioration des performances correspond par exemple à une augmentation de la conductivité électrique de la cellule électrochimique et/ou à une réduction des résistances électriques de contact vis-à-vis des autres composants de la cellule électrochimique (distributeur de gaz, couche active, dépôt microporeux).

Afin d'améliorer encore ces performances, il est possible de réaliser l'aiguilletage à travers toute l'épaisseur des nappes unidirectionnelles de filaments de carbone. Il est également possible de réaliser l'aiguilletage à travers deux faces principales opposées (référencées 116 et 118 sur la figure 7A) des nappes unidirectionnelles, soit au cours d'une même opération d'aiguilletage (les nappes unidirectionnelles étant dans ce cas disposées entre deux plateaux d'aiguilles) ou en réalisant consécutivement l'aiguilletage des deux face principales opposées. Il est également possible de réaliser l'aiguilletage avec une densité d'impacts des aiguilles contre les nappes unidirectionnelles comprise entre environ 100 et 300 impacts/cm². Cette densité d'impact peut être contrôlée en choisissant une densité d'aiguilles adaptée et/ou en contrôlant la fréquence à laquelle les aiguilles viennent traverser les nappes unidirectionnelles. Un tel aiguilletage permet également d'améliorer les transferts de gaz au sein de la cellule électrochimique.

L'opération d'aiguilletage peut être réalisée à travers toute l'épaisseur de l'ensemble des nappes unidirectionnelles formant la couche de diffusion. En variante, l'aiguilletage peut être réalisé à travers des empilements de nappes unidirectionnelles comportant un nombre de nappes unidirectionnelles inférieur au nombre de l'ensemble des nappes unidirectionnelles formant la couche de diffusion, l'aiguilletage étant ensuite répété pour l'empilement comportant l'ensemble des nappes unidirectionnelles formant la couche de diffusion.

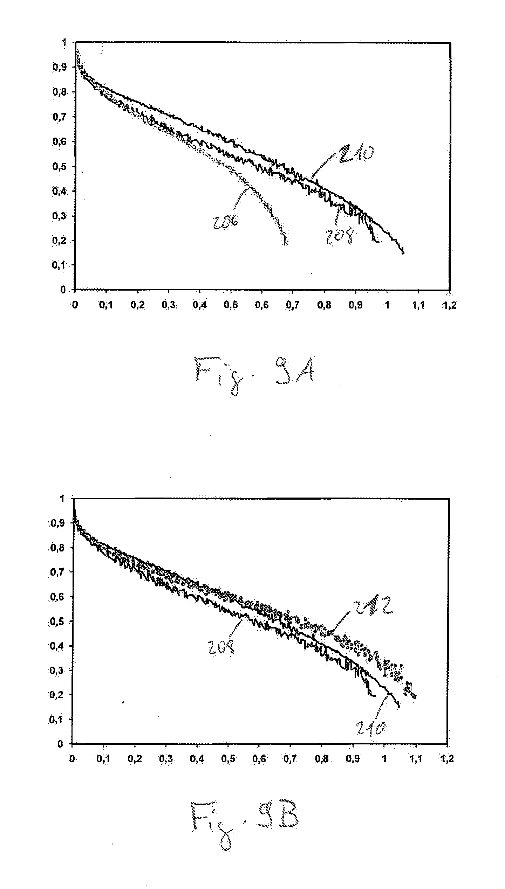

Les figures 9A et 9B illustrent cette amélioration des performances des cellules électrochimiques grâce aux opérations d'aiguilletage réalisées. La courbe 206 représentée sur la figure 9A correspond à la courbe de polarisation (abscisse : tension aux bornes de la cellule électrochimique, en volts ; ordonnée : densité de courant traversant la cellule électrochimique en A/cm²) d'une cellule électrochimique comportant quatre nappes unidirectionnelles orientées, en prenant comme référence l'orientation des filaments de carbone de la première nappe, selon une configuration 0°/90°/90°/0°, non aiguilletées ou aiguilletées d'une manière différente de celle décrite ci-dessus permettant d'améliorer les performances de la cellule électrochimique, c'est-à-dire en ne traversant pas la totalité de l'épaisseur des nappes unidirectionnelles et avec densité surfacique d'impacts inférieure à 100 impacts/cm². Chacune des nappes utilisées comporte un grammage d'environ 50g/m² et est formée de fils comportant 12000 filaments de carbone. Les courbes 208 et 210 correspondent aux courbes de polarisation minimale et maximale obtenues pour une même cellule électrochimique mais dans laquelle les nappes unidirectionnelles de filaments de carbone sont aiguilletées en traversant toute l'épaisseur des nappes unidirectionnelles, avec une densité surfacique d'impacts comprise entre environ 100 et 300 impacts/cm², ici égale à environ 138 impacts/cm². Il est possible d'améliorer encore les performances de la cellule électrochimique en réalisant l'aiguilletage des deux côtés des nappes unidirectionnelles (courbe 212 représentée sur la figure 9B).

Bien que les couches de diffusion réalisées à partir d'au moins une nappe unidirectionnelle de filaments de carbone aient été décrites ci-dessus principalement pour une pile à combustible ou un électrolyseur de type PEM, ces couches de diffusion s'appliquent pour tout dispositif électrochimique faisant appel à au moins une couche de diffusion à base d'au moins un matériau électriquement conducteur tel qu'une pile à combustible à acide phosphorique ou une batterie.

## Revendications

1. Procédé de réalisation d'une couche de diffusion (112) d'un dispositif électrochimique (10, 50), comportant au moins les étapes suivantes :
- superposition d'une pluralité de nappes unidirectionnelles (102, 102a, 102b, 102c) de filaments de carbone (104), les filaments de carbone (104) de chaque nappe unidirectionnelle (102, 102a, 102b, 102c) étant disposés les uns à côté des autres et orientés de manière sensiblement parallèle les uns par rapport aux autres,
- aiguilletage des nappes unidirectionnelles (102, 102a, 102b, 102c), brisant une partie des filaments de carbone tels que des portions brisées desdits filaments de carbone (104) soient enchevêtrées aux autres filaments de carbone (104) des nappes unidirectionnelles (102, 102a, 102b, 102c),
- découpe d'au moins une partie de la pluralité de nappes unidirectionnelles (102, 102a, 102b, 102c), les filaments de carbone (104) formant au moins une surface externe électriquement conductrice de la couche de diffusion (112),
et dans lequel l'étape d'aiguilletage est réalisée à travers toute l'épaisseur de la pluralité de nappes unidirectionnelles (102, 102a, 102b, 102c), et/ou à travers deux faces principales opposées (116, 118) de la pluralité de nappes unidirectionnelles (102, 102a, 102b, 102c), et/ou avec une densité d'impacts contre la pluralité de nappes unidirectionnelles (102, 102a, 102b, 102c) comprise entre 100 et 300 impacts/cm².

2. Procédé selon la revendication 1, dans lequel une orientation des filaments de carbone (104) d'au moins une première (102a) desdites nappes unidirectionnelles forme un angle non nul par rapport à une orientation des filaments de carbone (104) d'au moins une deuxième (102b) desdites nappes unidirectionnelles.

3. Procédé selon l'une des revendications précédentes, dans lequel, préalablement à la superposition des nappes unidirectionnelles (102, 102a, 102b, 102c), les filaments de carbone (104) sont enduits d'un matériau apte à renforcer la tenue mécanique des filaments de carbone (104) puis solidarisés les uns aux autre, formant les différentes nappes unidirectionnelles (102, 102a, 102b, 102c), ledit matériau de renfort étant éliminé après la solidarisation des filaments de carbone (104).

4. Procédé selon l'une des revendications précédentes, comportant en outre une étape de traitement des filaments de carbone (104) conférant aux filaments de carbone (104) un caractère hydrophobe ou hydrophile.

5. Procédé selon l'une des revendications précédentes, dans lequel chacune des nappes unidirectionnelles (102, 102a, 102b, 102c) a une épaisseur comprise entre 10 µm et 200 µm et/ou a une masse surfacique comprise entre 40 g/m² et 60 g/m².

6. Procédé selon l'une des revendications précédentes, dans lequel chaque filament de carbone (104) a un diamètre compris entre 6 µm et 8 µm et/ou a une résistivité électrique comprise entre 0,8 Ω.cm et 1,8 Ω.cm.

7. Procédé selon l'une des revendications précédentes, dans lequel une orientation des filaments de carbone (104) d'au moins une première (102a) desdites nappes unidirectionnelles forme un angle non nul ou compris entre 10° et 95° ou compris entre 40° et 50° par rapport à une orientation des filaments de carbone (104) d'au moins une deuxième (102b) desdites nappes unidirectionnelles de filaments de carbone.

8. Procédé selon l'une des revendications précédentes, dans lequel la couche de diffusion (112) comporte un nombre de nappes unidirectionnelles (102a, 102b, 102c) de filaments de carbone (104) superposées supérieur ou égal à deux et inférieur ou égal à cinq.

9. Procédé selon l'une des revendications précédentes, dans lequel la couche de diffusion (112) comporte une première (102a) et une deuxième (102c) nappes unidirectionnelles de filaments de carbone (104) telles que l'orientation des filaments de carbone (104) de la première nappe unidirectionnelle (102a) forme un angle compris entre 0° et 20° par rapport à l'orientation des filaments de carbone (104) de la deuxième nappe unidirectionnelle (102c), et comporte en outre une troisième nappe unidirectionnelle (102b) de filaments de carbone (104) disposée entre la première (102a) et la deuxième (102c) nappes unidirectionnelles de filaments de carbone (104) telle que les orientations des filaments de carbone (104) de la première (102a) et de la deuxième (102c) nappes unidirectionnelles forment chacune un angle compris entre 70° et 110° par rapport à l'orientation des filaments de carbone (104) de la troisième nappe unidirectionnel (102b).

10. Procédé selon la revendication 9, dans lequel la couche de diffusion (112) comporte en outre une quatrième nappe unidirectionnelle de filaments de carbone (104) disposée entre la première (102a) et la deuxième (102c) nappe unidirectionnelle de filaments de carbone (104) telle que l'orientation des filaments de carbone (104) de la quatrième nappe unidirectionnelle forme un angle compris entre 70° et 110° par rapport à chacune des orientations des filaments de carbone (104) de la première (102a) et de la deuxième (102c) nappe unidirectionnelle.

11. Procédé selon l'une des revendications 1 à 8, dans lequel la couche de diffusion (112) comporte quatre nappes unidirectionnelles de filaments de carbone (104) superposées telles que l'orientation des filaments de carbone (104) de chacune desdites quatre nappes unidirectionnelles forme un angle compris entre 25° et 65° par rapport à la ou les orientations des filaments de carbone (104) de la ou des nappes unidirectionnelles adjacentes à ladite nappe unidirectionnelle.

12. Procédé de réalisation d'une cellule électrochimique (10, 10a, 10b, 10c) à membrane échangeuse de protons, comportant au moins la mise en oeuvre d'un procédé de réalisation d'une couche de diffusion (112) selon l'une des revendications précédentes.

13. Procédé selon la revendication 12, dans lequel l'orientation des filaments de carbone (104) d'au moins une des nappes unidirectionnelles (102, 102a, 102b, 102c) de la couche de diffusion (112) est sensiblement perpendiculaire à une direction d'une longueur d'au moins un canal d'une plaque monopolaire disposée en regard de la couche de diffusion (112).

14. Procédé de réalisation d'une pile à combustible (50) à membrane échangeuse de protons, comportant au moins la mise en oeuvre d'un procédé de réalisation d'une cellule électrochimique (10, 10a, 10b, 10c) selon l'une des revendications 12 ou 13.

15. Procédé de réalisation d'un électrolyseur (50) à membrane échangeuse de protons, comportant au moins la mise en oeuvre d'un procédé de réalisation d'une cellule électrochimique (10, 10a, 10b, 10c) selon l'une des revendications 12 ou 13.

## Patentansprüche

1. Verfahren zur Herstellung einer Diffusionsschicht (112) für eine elektrochemische Vorrichtung (10, 50), wobei das Verfahren zumindest die folgenden Schritte umfasst:
- Überlagerung einer Vielzahl von unidirektionalen ebenen Anordnungen (102, 102a, 102b, 102c) von Kohlenstofffasern (104), wobei die Kohlenstofffasern (104) einer jeden unidirektionalen ebenen Anordnung (102, 102a,102b, 102c) Seite an Seite bzw. nebeneinander angeordnet sind und derart ausgerichtet sind, dass sie im Wesentlichen parallel zueinander liegen,
- Vernadelung bzw. Verankerung der unidirektionalen ebenen Anordnungen (102, 102a, 102b, 102c), wobei ein Teil der Kohlenstofffasern derart gebrochen wird, dass die gebrochenen Abschnitte der Kohlenstofffasern (104) in andere Kohlenstofffasern (104) der unidirektionalen ebenen Anordnungen (102, 102a, 102b, 102c) verkeilt werden,
- Zuschneiden zumindest eines Teils der Vielzahl von unidirektionalen ebenen Anordnungen (102, 102a, 102b, 102c), wobei die Kohlenstofffasern (104) zumindest eine elektrisch leitfähige Außenfläche der Diffusionsschicht (112) bilden;
und wobei in dem Verfahren der Vernadelungs- bzw. Verankerungsschritt durch die gesamte Dicke der Vielzahl von unidirektionalen ebenen Anordnungen (102, 102a, 102b, 102c) realisiert wird, und/oder quer durch zwei gegenüberliegende Hauptseiten (116, 118) der Vielzahl von unidirektionalen ebenen Anordnungen (102, 102a, 102b, 102c), und/oder mit einer Einstich- oder Einschlagdichte in die Vielzahl von unidirektionalen ebenen Anordnungen (102, 102a, 102b, 102c) von zwischen 100 und 300 Einstichen oder Einschlägen/cm².

2. Verfahren nach Anspruch 1, in welchem eine Ausrichtung der Kohlenstofffasern (104) zumindest einer ersten (102a) der unidirektionalen ebenen Anordnungen einen Winkel ungleich Null in Bezug auf eine Ausrichtung der Kohlenstofffasern (104) zumindest einer zweiten (1 02b) der unidirektionalen ebenen Anordnungen bildet.

3. Verfahren nach einem der vorhergehenden Ansprüche, in welchem vor der Überlagerung der unidirektionalen ebenen Anordnungen (102, 102a, 102b, 102c) die Kohlenstofffasern (104) mit einem Material überzogen werden, welches in der Lage ist, den mechanischen Halt der dann miteinander verbundenen Kohlenstofffasern (104) zu verstärken, wodurch die verschiedenen unidirektionalen ebenen Anordnungen (102, 102a, 102b, 102c) gebildet werden, wobei das Verstärkungsmaterial nach dem Zusammenschluss der Kohlenstofffasern (104) entfernt wird.

4. Verfahren nach einem der vorhergehenden Ansprüche, welches des Weiteren einen Schritt der Behandlung der Kohlenstofffasern (104) aufweist, wobei den Kohlenstofffasern (104) eine hydrophober oder hydrophiler Charakter verliehen wird.

5. Verfahren nach einem der vorhergehenden Ansprüche, in welchem jede der unidirektionalen ebenen Anordnungen (102, 102a, 102b, 102c) eine Dicke zwischen 10µm und 200µm und/oder eine Oberflächenmasse zwischen 40g/m² und 60g/m² aufweist.

6. Verfahren nach einem der vorhergehenden Ansprüche, in welchem jede Kohlenstofffaser (104) einen Durchmesser zwischen 6µm und 8µm und/oder einen elektrischen Widerstand zwischen 0,8Ω.cm und 1,8Ω.cm aufweist.

7. Verfahren nach einem der vorhergehenden Ansprüche, in welchem eine Ausrichtung der Kohlenstofffasern (104) zumindest einer ersten (102a) der unidirektionalen ebenen Anordnungen einen Winkel ungleich Null oder zwischen 10° und 95° oder zwischen 40° und 50° in Bezug auf eine Ausrichtung der Kohlenstofffasern (104) zumindest einer zweiten (102b) der unidirektionalen ebenen Anordnungen von Kohlenstofffasern bildet.

8. Verfahren nach einem der vorhergehenden Ansprüche, in welchem die Diffusionsschicht (112) eine Reihe von unidirektionalen ebenen Anordnungen (102a, 102b, 102c) aus Kohlenstofffasern (104) aufweist, welche von zwei oder mehr und von fünf oder weniger Anordnungen überlagert werden.

9. Verfahren nach einem der vorhergehenden Ansprüche, in welchem die Diffusionsschicht (112) eine erste (102a) und eine zweite (102c) unidirektionale ebene Anordnung aus Kohlenstofffasern (104) aufweist, so dass die Ausrichtung der Kohlenstofffasern (104) der ersten unidirektionalen ebenen Anordnung (102a) einen Winkel von zwischen 0° und 20° in Bezug auf die Ausrichtung der Kohlenstofffasern (104) der zweiten unidirektionalen ebenen Anordnung (102c) bildet, und des Weiteren eine dritte unidirektionale ebene Anordnung (102b) von Kohlenstofffasern (104) aufweist, welche zwischen der ersten (102a) und der zweiten (102c) unidirektionalen ebenen Anordnung von Kohlenstofffasern (104) angeordnet ist, so dass die Ausrichtungen der Kohlenstofffasern (104) der ersten (102a) und der zweiten (102c) unidirektionalen ebenen Anordnungen jeweils einen Winkel von zwischen 70° und 110° in Bezug auf die Ausrichtung der Kohlenstofffasern (104) der dritten unidirektionalen ebenen Anordnung (1 02b) bilden.

10. Verfahren nach Anspruch 9, in welchem die Diffusionsschicht (112) des Weiteren eine vierte unidirektionale ebene Anordnung von Kohlenstofffasern (104) aufweist, welche zwischen der ersten (102a) und der zweiten (102c) unidirektionalen ebenen Anordnung von Kohlenstofffasern (104) derart angeordnet ist, dass die Ausrichtung der Kohlenstofffasern (104) der vierten unidirektionalen ebenen Anordnung einen Winkel von zwischen 70° und 110° in Bezug auf jede der Ausrichtungen der Kohlenstofffasern (104) der ersten (102a) und der zweiten (102c) unidirektionalen ebenen Anordnung bildet.

11. Verfahren nach einem der Ansprüche 1 bis 8, in welchem die Diffusionsschicht (112) vier unidirektionale ebene Anordnungen von Kohlenstofffasern (104) aufweist, welche derart überlagert sind, dass die Ausrichtung der Kohlenstofffasern (104) einer jeden der vier unidirektionalen ebenen Anordnungen einen Winkel von zwischen 25° und 65° in Bezug auf die Anordnungen der Kohlensstofffasern (104) der einen oder der mehreren unidirektionalen ebenen Anordnungen bildet, welche an diese unidirektionale ebene Anordnung angrenzen.

12. Verfahren zur Herstellung einer elektrochemischen Zelle (10, 10a, 10b, 10c) mit Protonenaustauschmembran, welche zumindest die Ausführung eines Verfahrens zur Herstellung einer Diffusionsschicht (112) gemäß einem der vorhergehenden Ansprüche aufweist.

13. Verfahren nach Anspruch 12, in welchem die Ausrichtung der Kohlenstofffasern (104) zumindest einer der unidirektionalen ebenen Anordnungen (102, 102a, 102b, 102c) der Diffusionsschicht (112) im Wesentlichen senkrecht zu einer Längsrichtung zumindest eines Kanals einer einpoligen Platte liegt, welche gegenüber der Diffusionsschicht (112) angeordnet ist.

14. Verfahren zur Herstellung einer Brennstoffzelle (50) mit Protonenaustauschmembran, welches zumindest die Implementierung eines Verfahrens zur Herstellung einer elektrochemischen Zelle (10, 10a, 10b, 10c) nach einem der Ansprüche 12 oder 13 aufweist.

15. Verfahren zur Herstellung eines Elektrolyseapparats (50) mit Protonenaustauschmembran, welches zumindest die Ausführung eines Verfahren zur Herstellung einer elektrochemischen Zelle (10, 10a, 10b, 10c) nach einem der Ansprüche 12 oder 13 aufweist.

## Claims

1. Method for producing a diffusion layer (112) of an electrochemical device (10, 50), including at least the following steps:
- superimposition of multiple unidirectional webs (102, 102a, 102b, 102c) of carbon filaments (104), wherein the carbon filaments (104) of each unidirectional web (102, 102a, 102b, 102c) are positioned next to one another, and aligned roughly parallel with one another,
- needle punching of the unidirectional webs (102, 102a, 102b, 102c), breaking a proportion of the carbon filaments such that broken portions of said carbon filaments (104) are tangled with the other carbon filaments (104) of the unidirectional webs (102, 102a, 102b, 102c),
- cutting of at least a part of the multiple unidirectional webs (102, 102a, 102b, 102c), wherein the carbon filaments (104) form at least one electrically conducting outer surface of the diffusion layer (112),
and in which the step of needle punching is carried out through all the thickness of the multiple unidirectional webs (102, 102a, 102b, 102c), and/or through two principal opposite faces (116, 118) of the multiple unidirectional webs (102, 102a, 102b, 102c), and/or with an impact density against the multiple unidirectional webs (102, 102a, 102b, 102c) of between approximately 100 and 300 impacts/cm².

2. Method according to claim 1, in which an alignment of the carbon filaments (104) of at least a first (102a) of said unidirectional webs forms a non-zero angle relative to an alignment of the carbon filaments (104) of at least a second (102b) of said unidirectional webs.

3. Method according to one of the previous claims, in which, prior to the superimposition of the unidirectional webs (102, 102a, 102b, 102c), the carbon filaments (104) are coated with a material capable of strengthening the mechanical properties of the carbon filaments (104), and are then attached to one another, forming the different unidirectional webs (102, 102a, 102b, 102c), wherein said strengthening material is eliminated after the carbon filaments (104) are attached to one another.

4. Method according to one of the previous claims, also including a step of treatment of the carbon filaments (104) giving the carbon filaments (104) a hydrophobic or hydrophilic character.

5. Method according to one of the previous claims, in which each of the unidirectional webs (102, 102a, 102b, 102c) is between approximately 10 µm and 200 µm thick and/or has a surface mass of between approximately 40 g/m² and 60 g/m².

6. Method according to one of the previous claims, in which each carbon filament (104) has a diameter of between approximately 6 µm and 8µm and/or has an electrical resistivity of between approximately 0.8 Ω.cm and 1.8 Ω.cm.

7. Method according to one of the previous claims, in which an alignment of the carbon filaments (104) of at least a first (102a) of said unidirectional webs forms a non-zero angle or an angle of between approximately 10° and 95°, or between approximately 40° and 50°, relative to an alignment of the carbon filaments (104) of at least a second (102b) of said unidirectional webs of carbon filaments.

8. Method according to one of the previous claims, in which the diffusion layer (112) includes a number of superimposed unidirectional webs (102a, 102b, 102c) of carbon filaments (104) greater than or equal to two and less than or equal to five.

9. Method according to one of the previous claims, in which the diffusion layer (112) includes a first (102a) and second (102c) unidirectional webs of carbon filaments (104) such that the alignment of the carbon filaments (104) of the first unidirectional web (102a) forms an angle of between approximately 0° and 20° relative to the alignment of the carbon filaments (104) of the second unidirectional web (102c), and also includes a third unidirectional web (102b) of carbon filaments (104) positioned between the first (102a) and second (102c) unidirectional webs of carbon filaments (104), such that the alignments of the carbon filaments (104) of the first (102a) and second (102c) unidirectional webs forms an angle of between approximately 70° and 110° relative to the alignment of the carbon filaments (104) of the third unidirectional web (102b).

10. Method according to claim 9, in which the diffusion layer (112) also includes a fourth unidirectional web of carbon filaments (104) positioned between the first (102a) and second (102c) unidirectional web of carbon filaments (104), such that the alignment of the carbon filaments (104) of the fourth unidirectional web forms an angle of between 70° and 110° relative to each of the alignments of the carbon filaments (104) of the first (102a) and second (102c) unidirectional webs.

11. Method according to one of the claims 1 to 8, in which the diffusion layer (112) includes four unidirectional webs of carbon filaments (104), where these webs are superimposed such that the alignments of the carbon filaments (104) of each of said four unidirectional webs form an angle of between approximately 25° and 65° relative to the alignment or alignments of the carbon filaments (104) of the unidirectional webs adjacent to said unidirectional web.

12. Method for producing an electrochemical cell (10, 10a, 10b, 10c) with a proton exchange membrane, including at least the implementation of a method of production of a diffusion layer (112) according to one of the previous claims.

13. Method according to claim 12, in which the alignment of the carbon filaments (104) of at least one of the unidirectional webs (102, 102a, 102b, 102c) of the diffusion layer (112) is roughly perpendicular to a direction of a length of at least one channel of a monopolar plate positioned opposite the diffusion layer (112).

14. Method for producing a fuel cell (50) with a proton exchange membrane, including at least the implementation of a method of production of an electrochemical cell (10, 10a, 10b, 10c) according to one of the claims 12 or 13.

15. Method for producing an electrolyser (50) with a proton exchange membrane, including at least the implementation of a method of production of an electrochemical cell (10, 10a, 10b, 10c) according to one of the claims 12 or 13.
